# EUROPÄISCHE PATENTANMELDUNG

(11) **EP 0 898 377 A2**
(43) Veröffentlichungstag der Anmeldung: **24.02.1999**
(21) Anmeldenummer: 98106902.4
(22) Anmeldetag: 15.04.1998
(51) Int. Cl.: H04B 1/08, H04B 1/38

(54) **Elektronisches Gerät, insbesondere Autoradio, mit Hilfetaste**

(30) Priorität: 21.08.1997 DE 19736369
(71) Anmelder: ROBERT BOSCH GMBH, 70442 Stuttgart (DE)
(72) Erfinder: Messerschmidt, Rudolf, 31079 Sibbesse (DE); Draeger, Hermann, 31139 Hildesheim (DE)

(57) **Zusammenfassung**

Die Erfindung betrifft ein elektronisches Gerät, insbesondere ein Autoradio, mit einer Vielzahl von Bedientasten (S₁-Sₙ), die auf einer räumlich begrenzten Fläche, beispielsweise innerhalb eines Armaturbrettes o.ä. angeordnet und verschiedenen Funktionen zugeordnet sind. Um dem Bediener eine einfache Erläuterung von Bedientasten zu ermöglichen, ohne seine Aufmerksamkeit übermäßig abzulenken, ist erfindungsgemäß eine zusätzliche Hilfetaste vorgesehen, deren Betätigen, gefolgt von dem Betätigen einer der anderen Bedientasten, unmittelbar die Ausgabe einer die Funktion der jeweiligen anderen Taste erläuternden Information bewirkt.

Erfindungsgemäß ist dabei insbesondere vorgesehen, eine digitale Sprachausgabeeinheit zu verwenden, so daß die Aufmerksamkeit beispielsweise eines Autofahrers oder Piloten nicht abgelenkt wird.

## Beschreibung

Die Erfindung betrifft ein elektronisches Gerät, insbesondere ein Autoradio, mit einer Vielzahl von Bedientasten, die auf einer räumlich begrenzten Fläche angeordnet sind und verschiedenen Funktionen zugeordnet sind.

In der jüngeren Vergangenheit sind zahlreiche elektronische Geräte immer weiter miniaturisiert worden, während gleichzeitig immer komplexere Funktionen und Bedienmöglichkeiten in die Geräte integriert worden sind. Beispiele für solche Geräte sind Mobiltelefone, mobile Funk- und Navigationsgeräte, beispielsweise in Flugzeugen, und insbesondere Rundfunkempfangsgeräte für den Einbau in Kraftfahrzeuge, landläufig als Autoradios bezeichnet. Bei diesen Geräten besteht die Notwendigkeit, immer mehr Tasten auf immer kleineren Flächen anzuordnen, wobei wegen der räumlich begrenzten Fläche, die zur Verfügung steht, insbesondere erläuternde Beschriftungen stark verkürzt gestaltet werden müssen, während gleichzeitig immer mehr Symbole für die zahlreichen Sonderfunktionen entworfen werden müssen, die der durchschnittliche Bediener im allgemeinen nicht im Gedächtnis behält. Zahlreiche elektronische Geräte der gattungsgemäßen Art sind so komplex geworden, daß umfangreiche, auf Papier gedruckte Bedienungsanleitungen notwendig sind, die insbesondere technische Laien, nicht zuletzt wegen der häufig verwendeten schwer verständlichen Fachsprache, nur ungern lesen.

Dies führt dazu, daß zahlreiche Funktionen der jeweiligen elektronischen Geräte ungenutzt bleiben, oder im schlimmsten Fall dazu, daß der Anwender nicht dazu in der Lage ist das Gerät zu bedienen; insbesondere unter Zeitdruck, wie beispielsweise während einer Autofahrt, wenn der Bedienung eines elektronischen Gerätes nur beschränkte Aufmerksamkeit zugewandt werden kann.

Aus der Fachzeitschrift NTZ Heft 6/1997 ist ein Mobiltelefon, ein sogenanntes GSM-Handy mit einer farbigen Anzeige, einem sogenannten "Farbdisplay", bekannt, bei dem eine Bedienungsanleitung in Form einer menügesteuerten Displayanzeige in das Gerät integriert ist. Mit zwei dem Vorwärts- bzw. Rückwärtslauf dienenden Tasten ist es möglich, in der menügeführten Bedienungsanleitung vor- und zurückzublättern und so Erläuterungen zu einem bestimmten Stichwort ausfindig zu machen.

Es ist offensichtlich, daß eine solche integrierte Bedienungsanleitung zwar Vorteile bietet, jedoch für die geschilderte Situation während des Autofahrens, während derer der Fahrer beispielsweise einem Autoradio nur geringe Aufmerksamkeit zuwenden kann, nicht geeignet ist.

Der Erfindung liegt daher die Aufgabe zugrunde, ein elektronisches Gerät, insbesondere ein Autoradio, der gattungsgemäßen Art so weiter zu entwickeln, daß Informationen über die Belegung von Funktionstasten mit dem geringstmöglichen denkbaren Aufwand abrufbar sind, so daß die Aufmerksamkeit eines Bedieners nur in äußerst geringem Maße beansprucht wird.

Die Lösung der Aufgabe ist bei einem gattungsgemäßen elektronischen Gerät erfindungsgemäß durch eine zusätzliche Taste (Hilfetaste) gegeben, deren Betätigen, gefolgt von dem Betätigen einer der anderen Bedientasten, unmittelbar die Ausgabe einer die Funktion der jeweiligen anderen Taste erläuternden Information bewirkt.

Bei einem solchen erfindungsgemäßen Gerät ist es daher dem Bediener, beispielsweise dem Autofahrer, äußerst einfach möglich, Informationen über eine bestimmte Bedientaste abzurufen, da er lediglich zwei Tasten in schneller Folge nacheinander zu drücken braucht. Um die Aufmerksamkeit insbesondere eines Autofahrers weiter zu schonen, kann erfindungsgemäß insbesondere vorgesehen sein, daß die jeweilige einer Taste zugeordnete Information in Form einer Sprachinformation im Speicher einer digitalen Sprachausgabeeinheit abgespeichert ist. Auf diese Weise braucht der Fahrer, nachdem er die beiden Tasten in schneller Folge betätigt hat, die Augen nicht von dem vor ihm liegenden Straßenverlauf abzuwenden, um die Erläuterung der jeweiligen Taste zur Kenntnis nehmen zu können.

Bei einer erfinderischen Weiterbildung ist insbesondere vorgesehen, daß die Hilfetaste einen Impuls generiert, der über ein Zeitglied geleitet wird, mit dessen Ausgang ein Umschalter verbunden ist, an dessen Eingang die codierten Signale der Bedientasten anliegen. Wie im folgenden anhand der Zeichnungen noch erläutert werden wird, wird durch das Zeitglied (Todglied) ein bestimmter Zeitraum, beispielsweise ein einige Sekunden dauernder Rechteckimpuls, geschaffen, innerhalb dessen das Drücken einer Bedientaste dann die Ausgabe der zugehörigen erläuternden Information bewirkt, so daß der Fahrer nach dem Drücken der Hilfetaste nicht dem wiederum seine Aufmerksamkeit beeinträchtigenden Druck ausgesetzt ist, die Bedientaste, deren Erläuterung er wünscht, sofort drücken zu müssen.

Weitere bevorzugte Ausführungsformen sind in den Unteransprüchen beschrieben.

Die Erfindung wird im folgenden anhand zweier in der Zeichnung dargestellter Ausführungsbeispiele näher erläutert. In der Zeichnung zeigen:
Figur 1 - ein Blockschaltbild eines erfindungsgemäßen Autoradios mit Sprachausgabe und
Figur 2 - ein Blockschaltbild eines erfindungsgemäßen Autoradios mit alphanumerischer Anzeige.

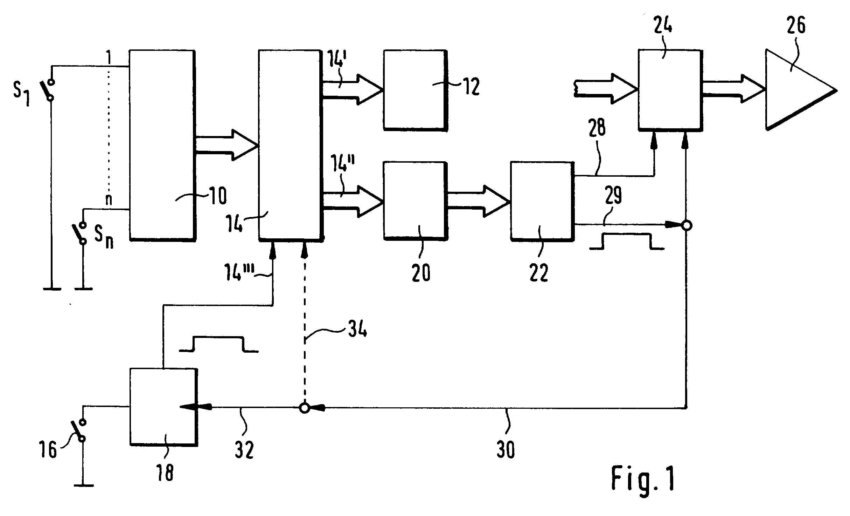

Figur 1 zeigt in stark vereinfachter Form das Blockschaltbild eines erfindungsgemäßen Autoradios, wobei für die Erfindung unwesentliche Teile zum besseren Verständnis fortgelassen worden sind.

Die Bedientasten des Autoradios sind mit S₁-Sₙ bezeichnet. Die Betätigung der Tasten S₁-Sₙ erzeugt jeweils einen Impuls, der in einem Tastatur-Koder 10 codiert wird und bei einem gattungsgemäßen Autoradio direkt in einem Block 12 verarbeitet wird, der hier symbolisch für beispielsweise Empfangseinheit, Verstärker etc. steht.

Erfindungsgemäß ist ein Umschalter 14 vorgesehen, bei dessen Betätigen das vom Tastatur-Koder 10 gelieferte Signal wahlweise auf einen Ausgang 14' geschaltet werden kann, nach dem es den herkömmlichen gattungsgemäßen Weg nimmt, oder auf einen zweiten Ausgang 14'', der im folgenden näher erläutert werden wird.

Zur Betätigung des Umschalters 14 dient ein Hilfseingang 14''', wobei der Umschalter 14 dann umschaltet, wenn ein Signal am Eingang 14''' anliegt.

Erfindungsgemäß ist eine Hilfetaste 16 vorgesehen, deren Schließen einen Impuls generiert, der in einem Zeitglied 18 zu einem Rechteckimpuls verlängert wird. Während der Rechteckimpuls 18 am Eingang 14''' des Umschalters 14 anliegt, wird das codierte Signal des Tastatur-Koders 10 zum Ausgang 14'' geleitet. Das Betätigen einer der Tasten S₁-Sₙ während der Dauer des Rechteckimpulses 18, d.h. während der Umschalter 14 auf den Ausgang 14'' geschaltet ist, bewirkt in einem Steuermodul 20 eine entsprechende Abfolge von Steuerimpulsen, um aus einem Sprachausgabespeicher 22 die entsprechende, der jeweiligen Taste S₁-Sₙ zugeordnete Sprachinformation abzurufen. In einem Audioumschalter 24 wird der Eingang einer Endstufe 26 entsprechend umgeschaltet, so daß anstelle des normalen zu verstärkenden Signals, beispielsweise kommend vom Empfangsteil, einem Cassettenabspielgerät, einem CD-Spieler o.ä., nunmehr das über die Leitung 28 ausgekoppelte Signal verstärkt wird, das der gespeicherten Sprachinformation entspricht.

Der Fahrer hört nun wunschgemäß eine Erläuterung der jeweiligen Bedientaste S₁-Sₙ.

Solange die Sprachausgabe 22 aktiv ist, kann hilfsweise zusätzlich ein am Ausgang 29 symbolisch dargestelltes Rechtecksignal generiert werden. Dies kann über einen Rückkopplungszweig 30 zweifach genutzt werden. Zum einen kann durch die abfallende Flanke des Rechteckimpulses über einen Eingang 32 das Zeitglied 18 zurückgesetzt werden, so daß der Umschalter 14 nach Beendigung der Sprachausgabe sofort wieder auf den Eingang 14' zurückschaltet und so beispielsweise das unterbrochene Radioprogramm für den Fahrer sofort wieder hörbar gemacht wird.

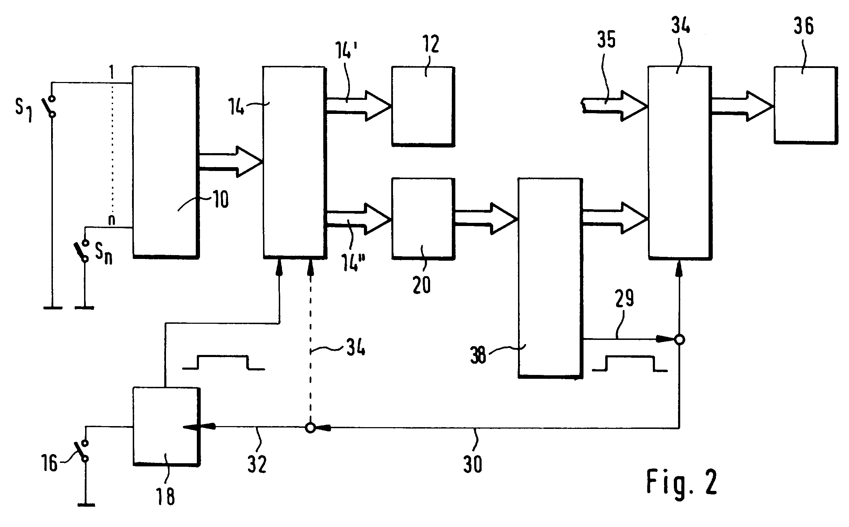

Zum zweiten kann über einen Hilfszweig 34 das über den Rückkopplungszweig 30 rückgekoppelte Rechtecksignal des Ausganges 29 des Sprachspeichers 22 dazu verwendet werden, den Umschalter 14 so zu steuern, daß eine weitere Initialisierung der Sprachausgabe unterdrückt wird, während die Erstsprachausgabe, d.h. die einer zuerst gedrückten Taste S₁-Sₙ zugeordnete Sprachausgabe, aktiv ist. Auf diese Weise kann verhindert werden, daß ungeübte Bediener durch zu schnelles Drücken verschiedener Tasten hintereinander miteinander konkurrierende Sprachinformation initialisieren. Figur 2 zeigt eine alternative Ausführungsform, bei der anstelle einer Sprachausgabe eine alphanumerische Anzeige vorgesehen ist. Wesentliche Teile dieses Blockschaltbildes stimmen mit dem in Figur 1 gezeigten Blockschaltbild überein. Gleiche Teile tragen gleiche Bezugszeichen, auf eine weitere Erläuterung identischer Komponenten wird der Einfachheit halber verzichtet.

Bei der in Figur 2 dargestellten Ausführungsform ist eine alphanumerische Anzeige (Display) 36 vorgesehen, der erfindungsgemäß ein Umschalter 34 vorgeschaltet ist. Im Normalbetrieb werden auf der Anzeige 36 beispielsweise RDS-Daten 35 dargestellt, die beispielsweise den Namen des empfangenen Senders symbolisieren können.

Bei Anliegen des Rechtecksignals 29 schaltet der Umschalter 34 um, so daß aus einem Speicher 38 entnommene Informationen, die der jeweiligen zu erläuternden Taste S₁-Sₙ zugeordnet sind, im Display 36 angezeigt werden.

Der weitere Aufbau der Schaltung entspricht dem der in Figur 1 gezeigten.

## Patentansprüche

1. Elektronisches Gerät, insbesondere Autoradio, mit einer Vielzahl von Bedientasten (S₁-Sₙ), die auf einer räumlich begrenzten Fläche angeordnet und verschiedenen Funktionen zugeordnet sind, **gekennzeichnet durch** eine zusätzliche Taste (Hilfetaste) (10), deren Betätigen, gefolgt von dem Betätigen einer der anderen Bedientasten, unmittelbar die Ausgabe einer die Funktion der jeweiligen anderen Taste erläuternden Information bewirkt.

2. Elektronisches Gerät nach Anspruch 1, **dadurch gekennzeichnet,** daß die Hilfetaste einen Impuls generiert, der über ein Zeitglied (18) geleitet wird, mit dessen Ausgang ein Umschalter (14) verbunden ist, an dessen Eingang die codierten Signale der Bedientasten (S₁-Sₙ) anliegen.

3. Elektronisches Gerät nach einem oder mehreren der vorhergehenden Ansprüche, **dadurch gekennzeichnet**, daß die jeweilige einer Taste zugeordnete Information in Form einer Sprachinformation in einem einer digitalen Sprachausgabeeinheit (22/24/26) zugeordneten Speicher (22) abgespeichert ist.

4. Elektronisches Gerät nach einem oder mehreren der Ansprüche 1 -3, **dadurch gekennzeichnet**, daß die jeweilige einer Taste zugeordnete Information in Form eines alphanumerischen Textes in einem einer digitalen Anzeigeeinheit (36) zugeordneten Speicher (38) abgespeichert ist.

5. Elektronisches Gerät nach einem der Ansprüche 3 oder 4, **dadurch gekennzeichnet**, daß ein zusätzlicher Rückkopplungszweig zu dem Umschalter (14) führt, über den bei Ausgabe einer einer Taste zugeordneten Information ein Sperrsignal leitbar ist, das eine Umschaltung des Umschalters (14) unterbindet.
